**Europäisches Patentamt**

**European Patent Office**

**Office européen des brevets**

(11) Veröffentlichungsnummer: **0 027 909**
**B1**

(12) **EUROPÄISCHE PATENTSCHRIFT**

(45) Veröffentlichungstag der Patentschrift:
**23.02.83**

(21) Anmeldenummer: **80105902.3**

(22) Anmeldetag: **29.09.80**

(51) Int. Cl.³: **B 65 G 53/22,** B 65 G 53/12,
B 65 G 53/42, B 65 G 53/66,
F 23 K 3/02

(54) **Anlage zur Förderung von feinkörnigem Gut.**

(30) Priorität: **26.10.79 DE 2943396**

(43) Veröffentlichungstag der Anmeldung:
**06.05.81 Patentblatt 81/18**

(45) Bekanntmachung des Hinweises auf die Patenterteilung:
**23.02.83 Patentblatt 83/8**

(84) Benannte Vertragsstaaten:
**AT BE CH DE FR GB IT LI LU NL SE**

(56) Entgegenhaltungen:
**DD-A-58 909
DE-A-2 703 736
DE-A-2 754 394
DE-B-1 016 397
DE-B-2 206 389
DE-C-415 119
DE-C-482 402
DE-C-605 429
DE-C-711 234
US-A-2 919 159**

(73) Patentinhaber: **Krupp Polysius AG,
Graf-Galen-Strasse 17, D-4720 Beckum (DE)**

(72) Erfinder: **Arbeletche, Carlos, Dalmerweg 86,
D-4720 Beckum (DE)**
Erfinder: **Boelcke, Ingo, Schillerstrasse 2a,
D-4700 Hamm (DE)**
Erfinder: **Poehlmann, Peter, Wielandstrasse 31,
D-4400 Münster (DE)**
Erfinder: **Kirchner, Klaus, Erlenweg 4,
D-4401 Sendenhorst (DE)**

(74) Vertreter: **Tetzner, Volkmar, Dr.-Ing. Dr. Jur.,
Van-Gogh-Strasse 3, D-8000 München 71 (DE)**

## Anlage zur Förderung von feinkörnigem Gut

Die Erfindung betrifft eine Anlage zur kontinuierlichen und genau dosierten Förderung von feinkörnigem Gut von einem Vorratsbehälter oder Erzeuger zu einem Verbraucher, wobei zwischen dem Vorratsbehälter bzw. Erzeuger und dem Verbraucher wenigstens zwei alternierend gefüllte und entleerte, pneumatische Druckgefässe vorgesehen sind und in jeder Gutaustragsleitung ein absperrbares Auslaufventil und ein den Gutstrom beeinflussendes, einstellbares Ventil angeordnet ist.

Es sind Kohlenstaub-Einblasanlagen bekannt, bei denen der Kohlenstaub über eine Dosierwaage aus einem Vorratsbehälter abgezogen, mittels einer Förderschnecke weitertransportiert, und durch eine pneumatische Fördereinrichtung der Kohlenstaubfeuerung zugeführt wird. Die wesentlichen Nachteile einer solchen Anlage bestehen in der Verschleissanfälligkeit der im Förderweg befindlichen, bewegten mechanischen Teile sowie der Förderrohrleitung, durch die das Material mit hoher Geschwindigkeit geblasen werden muss. Es erweist sich ferner bei diesen Anlagen als schwierig, die erforderliche Betriebssicherheit zu erzielen, insbesondere die Betriebsräume begehbar zu machen. Ein weiterer Nachteil liegt schliesslich in dem hohen Energiebedarf für den Transport des Kohlenstaubes.

Es ist weiterhin eine Anlage der eingangs genannten Art zur pneumatischen Förderung von feinkörnigem Gut bekannt, enthaltend zwei alternierend gefüllte und entleerte, pneumatische Druckgefässe (DE-C Nr. 482402). In der von jedem Druckgefäss zur pneumatischen Förderleitung führenden Gutaustragsleitung ist hierbei ein den Gutstrom beeinflussendes, einstellbares mechanisches Ventil (drehbare Segmente nach Art einer Irisblende) und — in Bewegungsrichtung des Gutes betrachtet — dahinter ein absperrbares Auslaufventil in Form einer schwenkbaren Klappe vorgesehen. Bei einer derartigen Anlage erweist es sich bereits als schwierig, mit Hilfe der mechanischen Irisblende des einstellbaren Ventiles den Förderstrom genau zu dosieren. Noch schwieriger ist es jedoch, bei dem alternierenden Betrieb der beiden Druckgefässe einen kontinuierlichen Förderstrom gleichbleibender Stärke in der Förderleitung zu erzielen. Es zeigt sich, dass die wechselweise Betätigung der von schwenkbaren Klappen gebildeten Auslaufventile gar nicht so genau aufeinander abgestimmt werden kann, dass — insbesondere unter Berücksichtigung unterschiedlicher Fliesseigenschaften des Materiales — bei der Umschaltung der Druckgefässe keine Änderung bzw. Schwankung im Fördergutstrom auftritt.

Der Erfindung liegt daher die Aufgabe zugrunde, unter Vermeidung dieser Nachteile eine Anlage der eingangs genannten Art so auszubilden, dass eine kontinuierliche, von Schwankungen bei der Umschaltung der Druckgefässe freie, genau dosierte Förderung von feinkörnigem Gut, insbesondere von Kohlenstaub, erreicht wird.

Diese Aufgabe wird erfindungsgemäss dadurch gelöst, dass die einstellbaren Ventile in den Gutaustragsleitungen als den Gutstrom pneumatisch beeinflussende Steuerdüsen ausgebildet und — in Bewegungsrichtung des Gutes betrachtet — hinter den Auslaufventilen angeordnet sind, und dass die Steuerdüsen an einen Luftverteiler angeschlossen sind, über den bei geöffneter Gutaustragsleitung des zugehörigen Druckgefässes eine Steuerluftmenge entsprechend der gewählten Fördergutmenge und bei abgesperrter Gutaustragsleitung des zugehörigen Druckgefässes eine verringerte Steuerluftmenge zuführbar ist.

Die Schwierigkeit, trotz Verwendung von alternierend gefüllten und entleerten pneumatischen Druckgefässen eine kontinuierliche, schwankungsfreie und genau dosierte Förderung des Gutes zu erhalten (was insbesondere bei einer Kohlenstaubförderung zur Aufrechterhaltung optimaler Brennverhältnisse wesentlich ist), wird erfindungsgemäss durch die Verwendung pneumatischer Steuerdüsen und eine bestimmte Luftbeaufschlagung dieser Steuerdüsen gelöst.

Die den Gutstrom pneumatisch beeinflussenden Steuerdüsen zeichnen sich gegenüber mechanischen Steuerorganen durch einen besonders grossen Regelbereich aus, was eine besonders rasche Einstellung und Regelung der gewünschten Fördergutmenge gestattet. Wesentlich ist hierbei, dass auch diejenige Steuerdüse, deren zugehöriges Druckgefäss gerade gefüllt wird, über den Luftverteiler mit einer verringerten Steuerluftmenge beaufschlagt wird. Hierdurch wird diese Steuerdüse sowie die anschliessende Gutaustragsleitung auch im nichtaktiven Zustand von Gutansätzen freigehalten, was die sofortige Betriebsbereitschaft der Steuerdüse im Zeitpunkt der Umschaltung der Druckgefässe gewährleistet und Brandnester, die zu Explosionen führen könnten, vermeidet. Diese ständige Betriebsbereitschaft der gerade nicht aktiven Steuerdüse sowie ihr grosser Regelbereich und die dadurch bedingte hohe Ansprechgeschwindigkeit stellen sicher, dass die Förderung des Feingutes auch im kritischen Zeitpunkt der Umschaltung der Druckgefässe glatt und schwankungsfrei entsprechend dem vorgewählten Sollwert vor sich geht.

Da die Steuerdüse — in Bewegungsrichtung des Gutes betrachtet — hinter dem absperrbaren Auslaufventil angeordnet ist, kann die dieser Steuerdüse bei abgesperrter Gutaustragsleitung zugeführte, verringerte Steuerluftmenge ungehindert über die Förderrohrleitung entweichen, nachdem sie die Steuerdüse und den anschliessenden Teil der Gutaustragsleitung freigeblasen hat.

Gemäss einer zweckmässigen Ausgestaltung der Erfindung ist eine die Steuerluft zur Steuerdüse führende Steuerluftleitung an eine mit der Förderleitung verbundene Druckluftleitung zwischen einem Differenzdruckgeber und einem Förderluftmenge-Regelventil angeschlossen. Wird auf diese Weise die Steuerluft (die ja in den Fördergutstrom mit eintritt) die Gesamtmenge der Transportluft konstant.

In der Zeichnung ist ein Ausführungsbeispiel der Erfindung veranschaulicht. Es zeigen:

Fig. 1 eine Schemadarstellung eines Ausführungsbeispieles der erfindungsgemässen Anlage;

Fig. 2 einen Längsschnitt durch ein Ausführungsbeispiel der Steuerdüse, und

Fig. 3 einen Querschnitt durch die Steuerdüse längs der Linie III-III der Fig. 2.

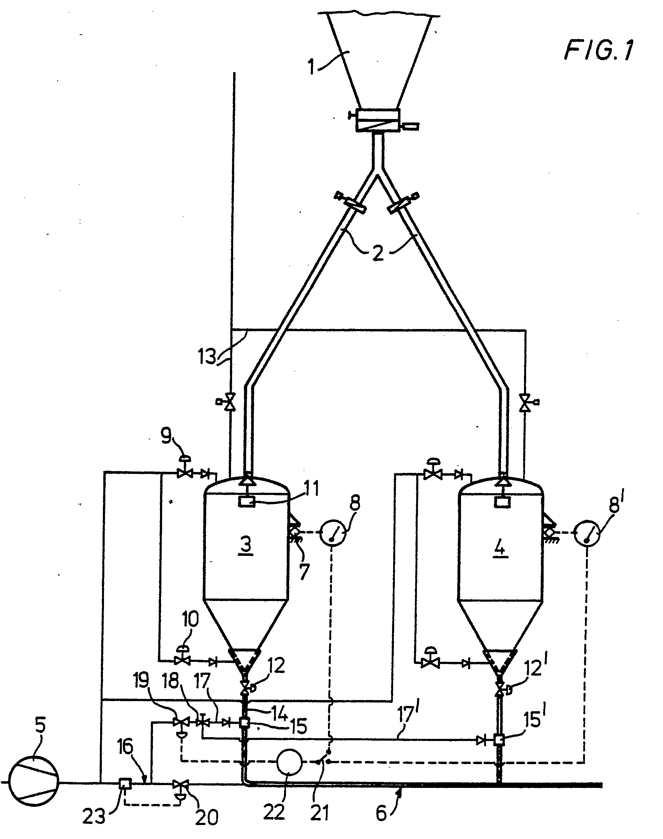

Die in Fig. 1 veranschaulichte Anlage enthält einen nur teilweise dargestellten Vorratsbehälter 1, eine Verteilerschurre 2, zwei pneumatische Druckgefässe 3 und 4, eine Druckluftquelle 5 sowie eine pneumatische Förderleitung 6, die zu einem nicht dargestellten Verbraucher führt.

Die pneumatischen Druckgefässe 3 und 4 sind gleichartig ausgebildet, so dass die Beschreibung des Druckgefässes 3 genügt. Es stützt sich auf Druckmesselementen 7 ab, die mit einer Waage 8 verbunden sind. Das Druckgefäss 3 ist ferner in bekannter Weise mit einer Oberdruckregler 9, einer Differenzdruckregelung 10 für die Auslaufzone, mit einem Einlaufventil 11, einem Auslaufventil 12 sowie einer Entlüftungsleitung 13 versehen.

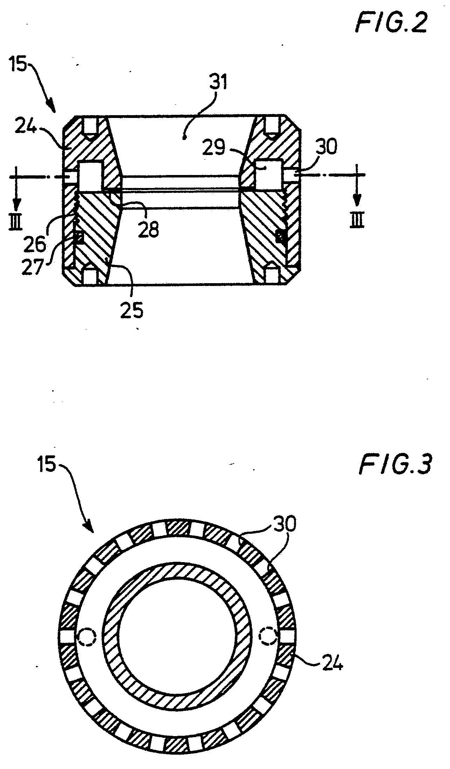

In der Reihe mit dem Auslaufventil 12 ist in der Gutaustragsleitung 14 eine Steuerdüse 15 angeordnet, deren konstruktive Einzelheiten anhand von Fig. 2 und 3 erläutert werden.

Die Gutaustragsleitung 14 mündet in die pneumatische Förderleitung 6 ein, die über eine Druckluftleitung 16 an die Druckluftquelle 5 angeschlossen ist.

Die Steuerluftleitungen 17, 17' der Steuerdüsen 15, 15' der beiden Druckgefässe 3, 4 sind an einen gemeinsamen Luftverteiler 18 angeschlossen, der über ein Regelventil 19, das von der Waage 8 angesteuert wird, mit der Druckluftleitung 16 verbunden ist. Ein weiteres Regelventil 20 mit einem vorgeschalteten Differenzdruckgeber 23 liegt zwischen der Druckluftleitung 16 und der Förderleitung 6.

Die beiden Waagen 8, 8' der Druckgefässe 3, 4 sind über einen Umschalter 21 an einen Regler 22 angeschlossen, der auf das Regelventil 19 wirkt.

Die Funktion der Anlage ist folgendermassen: Das feinkörnige Gut, beispielsweise Kohlenstaub, wird aus dem Vorratsbehälter 1 über die Verteilerschurre 2 und das jeweils geöffnete Einlaufventil 11 in eines der beiden Druckgefässe geführt. Nach Füllung des betreffenden Druckgefässes (beispielsweise 3) liefert die Waage 8 ein Signal, das eine am Vorratsbehälter vorgesehene Auslaufarmatur und zeitverzögert das Einlaufventil 11 des Druckgefässes 3 schliesst.

Über die Oberdruckregler 9 wird Druckluft auf das im Druckgefäss 3 befindliche Gut gegeben; gleichzeitig wird durch die über die Differenzdruckregelung 10 in den Auslaufbereich des Druckgefässes 3 eingeblasene Druckluft das Gut aufgelockert. Ist der erforderliche Oberdruck erreicht, so öffnen die Regelventile 19 und 20 sowie das Auslaufventil 12, und es wird nun das Gut pneumatisch über die Förderleitung 6 dem Verbraucher zugeführt, wobei die Gutmenge (pro Zeiteinheit) über den Regler 22 vorgewählt wird.

Entsprechend dem über den Regler 22 vorgegebenen Sollwert erhält die Steuerdüse 15 des gerade in Entleerung befindlichen Druckgefässes 3 über den Luftverteiler 18 und die Steuerluftleitung 17 eine entsprechende Steuerluftmenge, die den Fördergutstrom durch die Steuerdüse 15 mehr oder weniger einschnürt und damit nur die gewünschte Gutmenge in die Förderleitung 6 gelangen lässt.

Während dieser Zeit der Entleerung des Druckgefässes 3 wird das Druckgefäss 4 gefüllt. Das Auslaufventil 12' ist hierbei gesperrt. Die in Reihe mit dem gesperrten Auslaufventil 12' liegende Steuerdüse 15' erhält jedoch in dieser Zeit über die Steuerluftleitung 17' eine kleine (gegenüber dem aktiven Zustand verringerte) Steuerluftmenge, durch die diese Steuerdüse 15' ständig freigeblasen und damit in sofortiger Betriebsbereitschaft gehalten wird. Erfolgt dann die Umschaltung der Gutförderung vom Druckgefäss 3 auf das Druckgefäss 4 durch Schliessen des Auslaufventiles 12 und Öffnen des Auslaufventiles 12', so ergibt sich — bedingt durch das trägheitsfreie Ansprechen der Steuerdüse 15' — ein glatter, unterbrechungs- und sprungfreier Übergang der Förderung von dem einen auf das andere Druckgefäss.

In den Fig. 2 und 3 ist ein Ausführungsbeispiel der Steuerdüse 15 näher veranschaulicht. Die Steuerdüse besteht aus einem Oberteil 24 und einem Unterteil 25, die über ein Gewinde 26 miteinander verschraubt und zusätzlich durch eine Dichtung 27 abgedichtet sind. Zwischen dem Oberteil 24 und dem Unterteil 25 ist ein sehr enger Ringspalt 28 vorhanden. Im Oberteil 24 ist ferner ein mit dem Ringspalt 28 in Verbindung stehender Ringkanal 29 vorhanden, der über eine Vielzahl radialer Bohrungen 30 an die Steuerluftleitung 17 (vgl. Fig. 1) angeschlossen ist.

Die über die Steuerluftleitung 17 der Steuerdüse 15 zugeführte Steuerluftmenge wird über den Ringkanal 29 und den genau kalibrierten Ringspalt 28 in den Innenraum 31 der Steuerdüse 15 eingeblasen. Sie schnürt den Fördergutstrom mehr oder weniger ein und lässt damit nur die gewünschte Gutmenge in die Förderleitung 6 gelangen.

Die erfindungsgemässe Ausführung mit der beschriebenen Steuerdüse zeichnet sich gegenüber den bekannten Lösungen (mit Oberdruck- bzw. Transportdruckregelung) durch eine wesentlich grössere Regelgeschwindigkeit und Ansprechempfindlichkeit aus. Eine Anpassung der Regelcharakteristik der Steuerdüse ist durch Bemessung des Ringspaltes 28 in weiten Grenzen möglich; dabei kann dieser Ringspalt 28 durch mehr oder weniger starkes Ineinanderschrauben von Oberteil 24 und Unterteil 25 beliebig variiert werden. Die Wartung und Reinigung der Steuerdüse kann auf sehr einfache Weise erfolgen.

Die Dimensionierung der Steuerdüse hängt im einzelnen ab von

— dem feinkörnigen Gut (Beschaffenheit, Körnung, Temperatur, Fliessverhalten),
— der Förderentfernung,
— der Förderleistung,
— der gewünschten Regelbreite, und
— den am Ende der Förderleitung herrschenden Druckverhältnissen.

Zur Vergleichmässigung des Luftdruckes in den einzelnen Leitungen kann an die Druckluftquelle 5 noch ein Windkessel angeschlossen werden.

**Patentansprüche**

1. Anlage zur kontinuierlichen und genau dosierten Förderung von feinkörnigem Gut von einem Vorratsbehälter (1) oder Erzeuger zu einem Verbraucher, wobei zwischen dem Vorratsbehälter bzw. Erzeuger und dem Verbraucher wenigstens zwei alternierend gefüllte und entleerte, pneumatische Druckgefässe (3, 4) vorgesehen sind und in jeder Gutaustragsleitung (14) ein absperrbares Auslaufventil (12, 12') und ein den Gutstrom beeinflussendes, einstellbares Ventil angeordnet ist, dadurch gekennzeichnet, dass
a) die einstellbaren Ventile in den Gutaustragsleitungen (z.B. 14) als den Gutstrom pneumatisch beeinflussende Steuerdüsen (15, 15') ausgebildet und — in Bewegungsrichtung des Gutes betrachtet — hinter den Auslaufventilen (12, 12') angeordnet sind, und dass
b) die Steuerdüsen (15, 15') an einen Luftverteiler (18) angeschlossen sind, über den bei geöffneter Gutaustragsleitung (14) des zugehörigen Druckgefässes (z.B. 3) eine Steuerluftmenge entsprechend der gewählten Fördergutmenge und bei abgesperrter Gutaustragsleitung des zugehörigen Druckgefässes eine verringerte Steuerluftmenge zuführbar ist.

2. Anlage nach Anspruch 1, dadurch gekennzeichnet, dass eine die Steuerluft zur Steuerdüse (15, 15') führende Steuerluftleitung (17, 17') an eine mit der Förderleitung (6) verbundene Druckluftleitung (16) zwischen einem Differenzdruckgeber (23) und einem Förderluftmenge-Regelventil (20) angeschlossen ist.

3. Anlage nach Anspruch 1, dadurch gekennzeichnet, dass die Steuerdüsen (15, 15') einen über einen Ringkanal (29) gespeisten Ringspalt (28) einstellbarer Grösse aufweisen, der von zwei miteinander verschraubten Teilen (24, 25) der Steuerdüsen gebildet wird.

**Revendications**

1. Installation de transfert en continu et à dosage précis de matière à granulométrie fine d'un réservoir (1) ou d'un dispositif de production à une utilisation, au moins deux récipients de pression pneumatique (3, 4), qui sont remplis et vidés en alternance, étant prévus entre le réservoir ou le dispositif de production et l'utilisation et une soupape de sortie obturable (12, 12') ainsi qu'une soupape réglable, capable de faire varier le flux de la matière, étant montées dans chaque canalisation (14) de décharge de la matière, installation caractérisée en ce que
a) les soupapes réglables montées dans les canalisations de décharge de la matière (par exemple 14) sont conformées en tuyères de commande (15, 15') capables de faire varier pneumatiquement le flux de la matière et sont disposées en aval des soupapes de sortie (12, 12') — par rapport au sens du déplacement de la matière —, et
b) les tuyères de commande (15, 15') sont raccordées à un distributeur d'air (18) duquel elles reçoivent de l'air de commande à débit correspondant au débit choisi de la matière transférée lorsque la canalisation de décharge de la matière (14) du récipient de pression correspondant (par exemple 3) est ouverte et duquel elles reçoivent de l'air de commande à débit réduit lorsque la canalisation de décharge de la matière du récipient de pression correspondant est fermée ou obturée.

2. Installation selon la revendication 1, caractérisée en ce qu'une conduite (17, 17') conduisant l'air de commande à la tuyère (15, 15') est raccordée à une conduite d'air comprimé (16) qui est reliée à la canalisation de transfert (6) en un point compris entre un capteur de pression différentielle (23) et une soupape (20) de réglage du débit d'air de transfert.

3. Installation selon la revendication 1, caractérisée en ce que les tuyères de commande (15, 15') comportent un interstice annulaire (28) de dimension réglable qui est alimenté par un canal annulaire (29) et qui est formé de deux pièces (24, 25) des tuyères de commande qui sont vissées l'une sur l'autre.

**Claims**

1. Apparatus for the continuous delivery of accurately measured quantities of fine material from a storage bin (1) or production arrangement to a consuming arrangement in which at least two pneumatic pressure vessels (3, 4) which are alternately filled and emptied are provided between the storage bin or production arrangement and the consuming arrangement and an outlet valve (12, 12') which can be shut off and an adjustable valve which affects the material flow are arranged in each material discharge pipe (14), characterized in that
a) the adjustable valves in the material discharge pipes (e.g. 14) are constructed as control nozzles (15, 15') which affect the material flow pneumatically and are arranged behind the outlet valves (12, 12')—viewed in the direction of movement of the material—and in that
b) the control nozzles (15, 15') are connected to an air distributor (18) by means of which a quantity of control air can be supplied corresponding to the selected quantity of material conveyed when the material discharge pipe (14) of the relevant pressure vessel (e.g. 3) is open and a reduced quantity of control air can be supplied when the material discharge pipe of the relevant pressure vessel is closed.

2. Apparatus as claimed in claim 1, characterized in that a control air line (17, 17') which delivers the control air to the control nozzle (15, 15') is connected to a compressed air line (16) which is connected to the conveying pipe (6) between a differential pressure pick-off (23) and a regulating valve (20) for the quantity of conveying air.

3. Apparatus as claimed in claim 1, characterized in that the control nozzles (15, 15') have a ring slot (28) of adjustable size which is supplied by means of an annular channel (29) and is formed by two parts (24, 25) of the control nozzles which are screwed to each other.

FIG.1

*FIG.2*

*FIG.3*